# FASCICULE DE BREVET EUROPEEN

(11) **EP 0 691 162 B1**
(45) Date de publication et mention de la délivrance du brevet: **03.11.1999**
(21) Numéro de dépôt: 95401602.8
(22) Date de dépôt: 04.07.1995
(51) Int. Cl.: B05B 17/06, B60H 3/02

(54) **Dispositif de pulverisation, notamment d'eau sous forme de micro-gouttelettes apte à fonctionner dans un milieu non stationnaire**
Sprühvorrichtung, insbesondere zum Sprühen von Wasser in Mikrotropfenform, für eine nicht-stationäre Umgebung
Spraying device, in particular for spraying water in the form of microdroplets, for a non-stationary environment

(30) Priorité: 04.07.1994 FR 9408204
(43) Date de publication de la demande: 10.01.1996
(73) Titulaire: IMRA EUROPE S.A., F-06560 Valbonne (FR); TECHSONIC, 06600 Antibes (FR)
(72) Inventeur: Ching, Gil, F-06800 Cagnes sur Mer (FR); Giovanini, Anne, F-06560 Valbonne (FR); Guyomar, Daniel, F-06200 Nice (FR); Sauzade, Jean-Denis, F-6130 Grasse (FR); Fonzes, Georges, F-06600 Antibes (FR); Gschwind, Michel, F-06130 Grasse (FR); Lauretti, Jean, F-06110 Le Cannet (FR)
(74) Mandataire: Leszczynski, André

(56) Documents cités:
- EP-A- 0 571 316
- DE-A- 3 734 905
- FR-A- 2 655 279
- FR-A- 2 690 510
- US-A- 4 238 425

## Description

La présente invention concerne un dispositif de pulvérisation, notamment d'eau sous forme de micro-gouttelettes, apte à fonctionner dans un milieu non stationnaire, en particulier dans un véhicule.

Il est connu d'utiliser des dispositifs de micro-pulvérisation d'eau pour humidifier l'air ambiant dans une pièce d'un immeuble.

On connaît ainsi de tels dispositifs comportant un transducteur céramique piézo-électrique excité par un courant à haute fréquence qui émet des ondes ultrasonores dans une petite cuve immobile remplie d'eau.

Les ondes sont focalisées en un point voisin de la surface de l'eau où se forme un jet de liquide, appelé "fontaine acoustique", qui est entouré d'un brouillard de micro-gouttelettes. Un courant d'air créé au voisinage du jet de liquide évacue alors les micro-gouttelettes vers l'extérieur du dispositif, dans l'air ambiant.

Le document FR-A-2655279 fournit un exemple d'un tel dispositif.

Un tel dispositif ne peut fonctionner convenablement que s'il est maintenu dans une orientation préférentielle et n'est soumis à aucune accélération importante.

Dans le cas contraire, par exemple si le dispositif est logé dans l'habitacle d'un véhicule automobile, il subit des accélérations dues aux mouvements du véhicule, ce qui perturbe la formation de la fontaine acoustique, et peut entraîner un débordement de l'eau hors de sa cuve.

La présente invention vise à fournir un dispositif de pulvérisation qui est apte à fonctionner non seulement dans une position stable, mais également lorsqu'il est soumis à des accélérations de différentes natures.

La présente invention a pour objet un dispositif de pulvérisation comportant une cuve ouverte à sa partie supérieure, apte à contenir un liquide à pulvériser, tel que de l'eau, un élément piézo-électrique apte à émettre des ondes dans le liquide et des moyens de ventilation pour créer une circulation d'air au voisinage de la surface du liquide, caractérisé par le fait que les ondes sont focalisées au niveau de l'ouverture de la cuve, que la section transversale de la cuve (1) présente un rétrécissement progressif en direction de l'ouverture (2) de ladite cuve (1), et qu'il comporte :
- un récipient de collecte (4) dans lequel est placée la cuve (1),
- une pompe (5) reliée d'une part au récipient de collecte (4), d'autre part à la cuve (1), et apte à faire circuler le liquide en permanence entre la cuve (1) et le récipient de collecte (4), le débit de la pompe étant suffisamment élevé pour générer un jet de liquide à l'ouverture de la cuve, indépendamment de l'action des ondes ultrasonores, et
- un réservoir de liquide (12), également raccordé à la pompe (5), pour maintenir constante la quantité de liquide circulant dans le dispositif.

Grâce au rétrécissement de section transversale, et surtout au fait que le liquide déborde en permanence de la cuve, le liquide contenu dans la cuve est peu sensible aux accélérations du milieu dans lequel est installé le dispositif selon l'invention.

En effet, l'instabilité du niveau du liquide à l'ouverture de la cuve, qui pourrait résulter de débordements imprévisibles dus à de fortes accélérations subies par le dispositif, est en majeure partie compensée par le fait que, le liquide débordant en permanence et de façon forcée à l'ouverture de la cuve, même de fortes accélérations ne peuvent provoquer qu'une légère fluctuation de la quantité de liquide qui déborde, sans modifier de manière sensible le niveau du liquide à l'ouverture de la cuve.

De surcroît, non seulement un tel dispositif est peu sensible aux accélérations, mais en outre il est peu sensible à de légères variations d'inclinaison.

A titre d'exemple, le dispositif selon l'invention peut être embarqué dans une automobile, un bateau ou un avion.

Dans un mode de réalisation préféré de l'invention, les parois de la cuve sont réalisées en un matériau dur, apte à réfléchir les ondes, et sont conformées de manière à faire focaliser les ondes en un point situé au voisinage de la partie centrale de l'ouverture de la cuve.

Ainsi, les parois de la cuve remplissent deux fonctions distinctes, à savoir une limitation du risque de débordement du liquide en dehors de la cuve d'une part, et une focalisation des ondes au voisinage de la partie centrale de l'ouverture de la cuve d'autre part.

Par ailleurs, grâce à l'invention, l'énergie des ondes peut être mobilisée principalement pour la pulvérisation du liquide, la formation de la fontaine acoustique étant facilitée par le fait que le jet de liquide est déjà créé par la pompe.

Pour augmenter encore l'efficacité de la pulvérisation, il est préférable, selon l'invention, de choisir le diamètre de l'ouverture de la cuve, voisin de celui de la fontaine acoustique qui serait naturellement formée par les ondes en l'absence de pompe, de manière à superposer au mieux le jet d'eau formé par la pompe et la fontaine acoustique générée par les ondes.

Avantageusement, un déflecteur est prévu dans le prolongement de l'ouverture de la cuve, pour retenir les grosses gouttes de liquide qui sont ainsi récupérées dans le récipient de collecte, tandis que le courant d'air généré par les moyens de ventilation évacue les micro-gouttelettes vers l'extérieur du dispositif.

Dans le but de mieux faire comprendre l'invention, on va en décrire maintenant un mode de réalisation donné à titre d'exemple non limitatif en référence au dessin annexé dans lequel :
- la figure 1 est une vue schématique en élévation et en coupe d'un mode de réalisation du dispositif selon l'invention, et
- la figure 2 est une vue de dessus de la figure 1.

Le dispositif représenté sur le dessin comprend une cuve 1 de révolution qui comporte une base cylindrique 1a et une partie supérieure 1b dont la section va en rétrécissant en direction d'une ouverture 2.

La cuve 1 est destinée à contenir de l'eau.

Un transducteur piézo-électrique constitué par une céramique 3, de forme cylindrique, est placé à l'intérieur de la cuve 1, contre sa paroi de fond.

La céramique 3 est apte à émettre des ondes ultrasonores dans l'eau contenue dans la cuve, en direction de l'ouverture 2.

Les parois de la cuve sont réalisées par exemple en acier inoxydable qui est un matériau suffisamment dur pour réfléchir les ondes en absorbant une énergie minimale.

La forme convergente des parois de la cuve 1 est déterminée de manière à faire focaliser les ondes dans la partie centrale de l'ouverture 2.

La cuve 1 est logée à l'intérieur d'un récipient fermé 4 qui constitue un récipient de collecte au sens de l'invention.

A l'intérieur de ce récipient de collecte 4, sont disposés une pompe 5 et un ventilateur 6, entraînés par un moteur commun 7.

La pompe 5 est raccordée d'une part à la cuve 1 par l'intermédiaire d'un premier conduit 8, d'autre part au récipient de collecte 4 par l'intermédiaire d'un deuxième conduit 9 dont l'embouchure 10 se situe en bas dudit récipient de collecte 4.

La pompe 5 est également reliée, par l'intermédiaire d'un troisième conduit 11, à un réservoir d'eau 12.

Le ventilateur 6, ainsi d'ailleurs que la pompe 5 pour des raisons de gain de place, sont logés dans un compartiment 13 du récipient de collecte 4. Ce compartiment 13 est délimité par une paroi d'extrémité 4a du récipient de collecte 4 et par une cloison intérieure étanche 14.

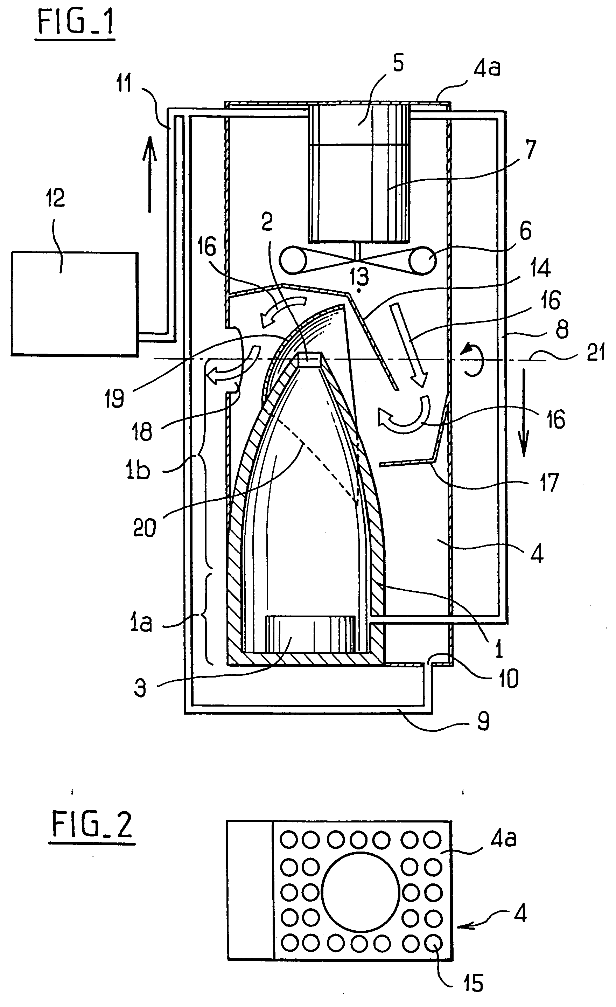

Comme on le voit sur la figure 2, la cloison 4a comporte des orifices 15 dans sa partie correspondant au compartiment 13.

Ces orifices 15 permettent l'admission d'air en provenance de l'extérieur sous l'effet du ventilateur 6 qui crée une circulation d'air dans le récipient de collecte, comme matérialisé par les flèches 16.

Le cheminement du courant d'air ainsi créé est déterminé par un déflecteur 17 et par la cloison 14 dont la face opposée au compartiment 13 forme déflecteur.

Un orifice 18 ménagé dans le récipient de collecte 4 débouche à l'extérieur et permet l'échappement de l'air.

La partie d'extrémité de la cuve 1 est enfermée dans un déflecteur en forme de calotte sphérique 19 d'axe sensiblement perpendiculaire à l'axe longitudinal de la cuve 1, et dont la concavité est tournée vers le déflecteur 17 et à l'opposé de l'orifice 18.

La calotte 19 est solidarisée à la paroi extérieure de la cuve 1 selon un joint étanche 20.

On va maintenant expliquer le fonctionnement du dispositif de pulvérisation représenté sur le dessin.

Pour faciliter l'explication, on considère que l'orientation du dispositif est verticale, comme représentée sur la figure 1.

La cuve 1 est remplie d'eau.

La pompe 5 refoule de l'eau par le conduit 8, de telle sorte qu'il se forme un jet d'eau à l'ouverture de la cuve.

L'eau est récupérée par le récipient de collecte 4 et remise en circulation par la pompe 5, via le conduit 9.

La céramique 3 émet des ondes qui progressent dans l'eau selon un plan perpendiculaire à l'axe longitudinal de la cuve.

La forme convergente des parois de la cuve 1 fait focaliser les ondes en un point situé dans la partie centrale de l'ouverture 2.

Cette concentration de l'énergie des ondes au voisinage de la surface de l'eau permet la formation d'un brouillard de micro-gouttelettes environnant le jet d'eau.

Ces micro-gouttelettes, dans un mode préféré, présentent un diamètre inférieur à 5 micromètres et sont emportées vers l'extérieur par le courant d'air formé par le ventilateur 6.

D'autres gouttes, plus lourdes, se forment et sont récupérées par la calotte sphérique 19 et tombent par gravité au fond du récipient de collecte 4 pour être remises en circulation par la pompe 5, de la même manière que l'eau non pulvérisée provenant du jet d'eau.

Le diamètre de l'ouverture 2 est choisi de manière à ce que le jet d'eau formé par la pompe 5 soit sensiblement le même que la fontaine acoustique qui serait générée par les seules ondes émises par la céramique 3.

Ainsi, l'énergie des ondes qui n'est pas utilisée pour former cette fontaine acoustique, sert principalement à pulvériser l'eau.

En d'autres termes, le rendement de la pulvérisation est accru du fait que l'énergie des ondes est utilisée en majeure partie pour pulvériser l'eau, le jet d'eau étant déjà formé par la pompe.

Grâce aux différents déflecteurs et à la calotte sphérique 19, il est possible de faire fonctionner le dispositif décrit dans toutes les positions qui peuvent résulter d'un pivotement de 85° de ce dispositif autour d'un axe 21, perpendiculaire à l'axe longitudinal de la cuve 1 et compris dans le plan du dessin.

En d'autres termes, le dispositif peut fonctionner en étant incliné d'un angle minimal de 5 degrés par rapport à l'horizontale.

Le réservoir d'eau 12 permet à la pompe 5 de maintenir constante la quantité d'eau circulant dans le dispositif, en compensant le volume d'eau évacué vers l'extérieur par micro-pulvérisation.

Il est clair que ce dispositif, dont les dimensions hors tout sont de l'ordre de 4 cm de diamètre et de 10 cm de long, peut être facilement installé dans un véhicule.

Le fait qu'il soit apte à fonctionner convenablement en étant incliné d'un angle minimal de 5 degrés par rapport à l'horizontale, permet une utilisation aisée dans toutes sortes de véhicules.

Par exemple, le dispositif selon l'invention peut être installé dans l'habitacle d'une automobile avec son axe longitudinal incliné de 10 degrés par rapport à l'horizontale, ce qui lui confère un encombrement vertical d'environ 5,7 cm qui permet par exemple de le loger dans le plafond de l'habitacle.

Le dispositif selon l'invention peut également être embarqué dans un avion ou sur un bateau où les conditions de stabilité ne sont, à priori, pas très bonnes.

Il est bien entendu que le mode de réalisation qui vient d'être décrit ne présente aucun caractère limitatif, et qu'il pourra recevoir toutes modifications désirables sans sortir pour cela du cadre de l'invention.

## Revendications

1. Dispositif de pulvérisation comportant une cuve ouverte à sa partie supérieure, apte à contenir un liquide à pulvériser, tel que de l'eau, un élément piézo-électrique apte à émettre des ondes dans le liquide et des moyens de ventilation pour créer une circulation d'air au voisinage de la surface du liquide, caractérisé par le fait que les ondes sont focalisées au niveau de l'ouverture de la cuve, que la section transversale de la cuve (1) présente un rétrécissement progressif en direction de l'ouverture (2) de ladite cuve (1), et qu'il comporte :
- un récipient de collecte (4) dans lequel est placée la cuve (1),
- une pompe (5) reliée d'une part au récipient de collecte (4), d'autre part à la cuve (1), et apte à faire circuler le liquide en permanence entre la cuve (1) et le récipient de collecte (4), le débit de la pompe étant suffisamment élevé pour générer un jet de liquide à l'ouverture de la cuve, indépendamment de l'action des ondes ultrasonores, et
- un réservoir de liquide (12), également raccordé à la pompe (5), pour maintenir constante la quantité de liquide circulant dans le dispositif.

2. Dispositif selon la revendication 1, caractérisé par le fait que l'élément piézoélectrique est placé contre la paroi de fond de la cuve et que les parois de la cuve (1) sont réalisées en un matériau dur, apte à réfléchir les ondes, et sont conformées de manière à faire focaliser les ondes en un point situé dans la partie centrale de l'ouverture (2) de la cuve (1).

3. Dispositif selon l'une quelconque des revendications 1 et 2, caractérisé par le fait que l'ouverture (2) de la cuve présente un diamètre voisin de celui de la fontaine acoustique qui serait naturellement formée par les ondes en l'absence de pompe (5).

4. Dispositif selon l'une quelconque des revendications 1 à 3, caractérisé par le fait qu'un déflecteur (19) est prévu dans le prolongement de l'ouverture (2) de la cuve (1), pour retenir les grosses gouttes de liquide qui sont ainsi récupérées dans le récipient de collecte (4).

## Claims

1. Spraying device comprising a tank open at its upper part, able to contain a liquid to be sprayed, such as water, a piezoelectric element able to emit waves into the liquid and fan means for creating a circulation of air in the vicinity of the surface of the liquid, characterized in that the waves are focused near the opening of the tank, that the cross section of the tank (1) exhibits a progressive constriction in the direction of the opening (2) of the said tank (1), and that it comprises:
- a collection container (4) in which the tank (1) is placed,
- a pump (5) connected on the one hand to the collection container (4) and on the other hand to the tank (1), and able to circulate the liquid continuously between the tank (1) and the collection container (4), the output from the pump being sufficiently high to generate a jet of liquid at the opening of the tank, independently of the action of the ultrasound waves, and
- a liquid reservoir (12), likewise linked up to the pump (5), so as to keep the quantity of liquid circulating through the device constant.

2. Device according to Claim 1, characterized in that the piezoelectric element is placed against the bottom wall of the tank and that the walls of the tank (1) are made from a hard material, able to reflect the waves, and are shaped in such a way as to focus the waves at a point located in the central part of the opening (2) of the tank (1).

3. Device according to either one of Claims 1 and 2, characterized in that the opening (2) of the tank exhibits a diameter much the same as that of the acoustic fountain which would be formed naturally by the waves in the absence of a pump (5).

4. Device according to either one of Claims 1 to 3, characterized in that a deflector (19) is provided extending ahead of the opening (2) of the tank (1), so as to retain the large drops of liquid which are thus recovered in the collection container (4).

## Patentansprüche

1. Sprühvorrichtung, welche ein an seinem oberen Teil offenes Gefäß aufweist, das geeignet ausgebildet ist, eine zu versprühende oder zu zerstäubende Flüssigkeit, wie Wasser, aufzunehmen, ein piezoelektrisches Element aufweist, das geeignet ausgebildet ist, um Wellen in der Flüssigkeit auszusenden, und Ventilationsmittel aufweist, um eine Luftzirkulation in der Nähe der Flüssigkeitsoberfläche hervorzurvfen, dadurch gekennzeichnet, daß die Wellen auf das Niveau bzw. die Höhe der Gefäßöffnung fokussiert bzw. gebündelt sind, daß der Querschnitt des Gefäßes (1) eine fortschreitende Verengung in Richtung der Öffnung (2) des vorgenannten Gefäßes (1) zeigt, und daß sie aufweist:
- einen Sammelbehälter (4) in welchem das Gefäß (1) angeordnet ist,
- eine Pumpe (5), die einerseits mit dem Sammelbehälter (4) verbunden ist und die andererseits mit dem Gefäß (1), dergestalt, daß eine fortwährende Zirkulation der Flüssigkeit zwischen dem Gefäß (1) und dem Sammelbehälter (4) ermöglicht ist, wobei die Pumpleistung ausreichend hoch ist, um unabhängig von der Einwirkung der Ultraschallwellen einen Flüssigkeitsstrahl an der Gefäßöffnung zu erzeugen und
- einen Flüssigkeitsvorratsbehälter (12), der ebenso an die Pumpe (5) angeschlossen ist, um die in der Vorrichtung zirkulierende Flüssigkeitsmenge konstant zu halten.

2. Vorrichtung gemäß Anspruch 1, dadurch gekennzeichnet, daß das piezoelektrische Element an der Bodenwand des Gefäßes (1) plaziert ist, und daß die Wände des Gefäßes (1) aus einem harten, für die Reflexion der Wellen geeigneten Material ausgebildet und derart geformt bzw. ausgebildet sind, daß die Wellen in einem Punkt im zentralen Bereich der Oberfläche (2) des Gefäßes (1) fokussiert bzw. gebündelt werden.

3. Vorrichtung nach irgendeinem der Ansprüche 1 und 2, dadurch gekennzeichnet, daß die Öffnung (2) des Gefäßes einen Durchmesser nahe demjenigen der Schallfontäne aufweist, welche auf natürliche Weise durch die Wellen bei Abwesenheit bzw. Stillstand der Pumpe erzeugt würde.

4. Vorrichtung nach irgendeinem der Ansprüche 1 bis 3, dadurch gekennzeichnet, daß ein Deflektor (19) in der Verlängerung der Öffnung (2) des Gefäßes (1) vorgesehen ist, um große Flüssigkeitstropfen zurückzuhalten, welche auf diese Weise in den Sammelbehälter (4) zurückgeführt werden.
